Europäisches Patentamt

European Patent Office

Office européen des brevets

(11) Numéro de publication : **0 356 268 B1**

(12) **FASCICULE DE BREVET EUROPEEN**

(45) Date de publication du fascicule du brevet :
23.12.92 Bulletin 92/52

(51) Int. Cl.⁵ : **B65G 13/08, B65G 13/071**

(21) Numéro de dépôt : **89401667.4**

(22) Date de dépôt : **14.06.89**

(54) **Elément courbe pour chemin de transfert.**

(30) Priorité : **23.08.88 FR 8811117**

(43) Date de publication de la demande :
**28.02.90 Bulletin 90/09**

(45) Mention de la délivrance du brevet :
**23.12.92 Bulletin 92/52**

(84) Etats contractants désignés :
**AT BE CH DE ES GB GR IT LI LU NL SE**

(56) Documents cités :
**FR-A- 2 469 364**

(73) Titulaire : **MACHINES SPECIALES ET
MANUTENTION
424 La Closerie Mont d'Est
Noisy Le Grand (Seine Saint Denis) (FR)**

(72) Inventeur : **Hilaire, Gérard Michel
Les Cerneaux Chemin des Clos Saint Père
77400 Gouvernes (FR)**

(74) Mandataire : **Cabinet Pierre HERRBURGER
115, Boulevard Haussmann
F-75008 Paris (FR)**

## Description

La présente demande concerne un élément courbe pour chemin de transfert, notamment pour un convoyeur tel qu'un convoyeur à bande, à galets, à chaînes, à courroies ou à rouleaux tel que défini dans le préambule de la première revendication. Un tel élément est connu selon le document FR-A-2 469 364.

Dans les chemins de transfert formés de convoyeurs à bande, à rouleaux ou à galets, la trajectoire des produits transportés n'est pas toujours rectiligne, aussi ces chemins de transfert comportent-ils des parties en courbe. Ces éléments courbes sont en général constitués d'un châssis portant des axes dirigés radialement et munis de rouleaux ou de galets. Il existe des éléments courbes moteurs, c'est-à-dire dont certains voire tous les rouleaux sont entraînés. Le mécanisme d'entraînement est relativement compliqué puisqu'il utilise des chaînes ou des pignons.

Ces éléments courbes présentent un certain nombre d'inconvénients liés à la complexité et à la rigidité de leur structure.

La présente invention se propose de créer un élément courbe permettant, non seulement, d'assurer la continuité du chemin de transfert au niveau d'une courbe, mais également de fonctionner comme organe accélérateur ou retardateur avec, éventuellement, changement de niveau avec des moyens simples, efficaces et adaptables.

A cet effet, l'invention concerne un élément du type ci-dessus, comme défini dans la première revendication.

Ainsi, l'élément courbe selon l'invention peut voir son inclinaison modifiée suivant les charges à transporter par simple relevage ou abaissement des axes pour en modifier l'inclinaison. Cette inclinaison des axes successifs constituant l'élément courbe peut avoir une inclinaison qui varie entre l'entrée et la sortie de l'élément, de manière que les organes de roulement d'entrée et de sortie soient chaque fois situés dans le prolongement des autres éléments du chemin de transfert mais qu'au niveau de la courbe, les organes de roulement soient relevés pour faciliter le passage rapide des produits circulant sur le chemin de transfert.

Comme les galets d'entraînement sont réglables par rapport aux disques moteurs, il est possible de modifier la position des galets sur le disque de façon à augmenter leur vitesse de rotation ou de la diminuer en éloignant ou en rapprochant le galet du centre du disque. Cette disposition des galets peut être variable d'un galet à l'autre ; la disposition peut être progressive pour créer un effet d'accélération dans le virage, effet qui se traduit par un espacement des produits transportés. Il peut également y avoir effet de décélération en disposant les galets des organes de roulement de manière inverse.

Pour cela, les galets d'entraînement peuvent être réglables en translation sur l'axe et être bloqués dans une position déterminée. L'axe peut également être logé de façon télescopique et réglable dans un autre axe portant les organes de roulement.

Les organes de roulement sont, de préférence, deux ou plusieurs galets montés sur l'axe. Le ou les galets peuvent être solidaires de l'axe. Ils peuvent également être, du moins pour certains, montés fous.

Selon une solution préférentielle, le galet situé près de l'extérieur de la courbe est entraîné et le ou les galets situés vers l'intérieur de la courbe sont les galets libres en rotation, de manière à faciliter le transfert des produits en courbe ; ainsi on évite que ces produits ne soient soumis à des vitesses différentes à l'intérieur et à l'extérieur de la courbe, différences de vitesse qui tendraient à les faire tourner sur eux mêmes et à les déstabiliser ou si les produits sont relativement larges, à les coincer ou à les freiner entre les chemins de guidage intérieur et extérieur équipant l'élément courbe.

Il est à remarquer que l'angle de l'élément courbe est quelconque, en fonction du trajet du chemin de transfert. Comme les axes des organes sont relevables, il est possible d'avoir une hauteur de sortie ou d'entrée différente. Cela peut être réalisé en multipliant le nombre de disques moteurs.

Enfin, pour assurer le contact entre les galets et le disque d'entraînement, l'extrémité de l'axe peut être reliée à un organe élastique tel qu'un ressort de compression, notamment un ressort à gaz, exerçant une certaine force d'application du galet sur le disque d'entraînement.

De manière inverse, l'extrémité des axes portant les galets peut être fixée en hauteur et le disque d'entraînement monté avec un ressort de rappel qui l'applique contre les galets, notamment un ressort dit à gaz.

La présente invention sera décrite de manière plus détaillée à l'aide des dessins annexés, dans lesquels :

- la figure 1 est une vue de dessus d'un élément courbe correspondant à un angle de 180°,
- la figure 2 est une vue de côté d'un élément courbe, au niveau d'un organe de roulement, montrant un paquet circulant dans la courbe.

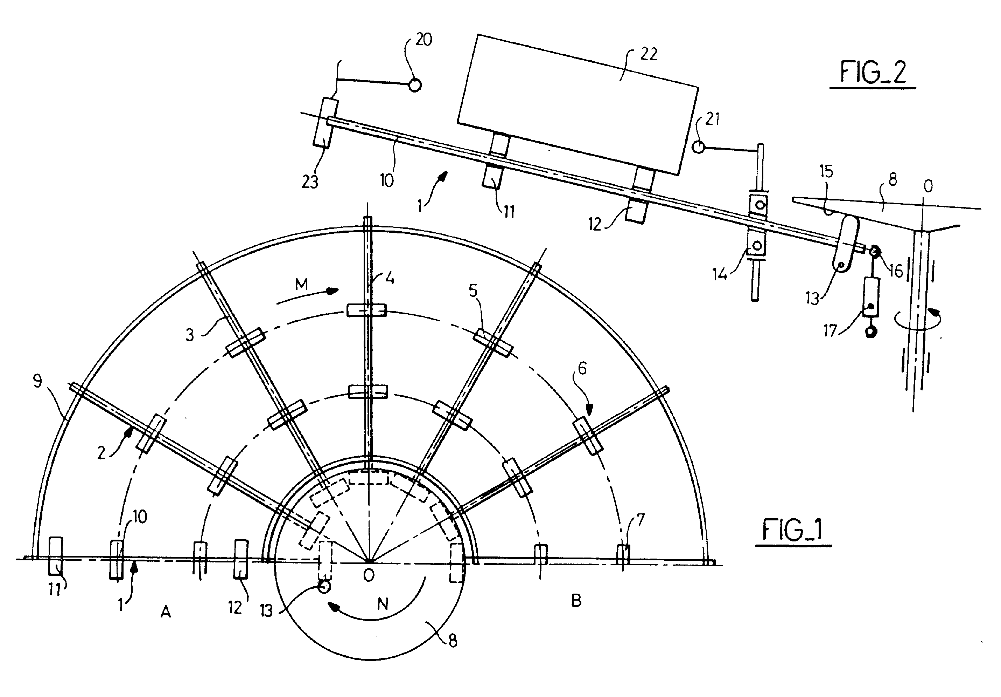

Selon la figure 1, l'élément courbe, notamment destiné à un chemin de transfert et en particulier un élément destiné à faire la jonction entre deux segments de transfert rectiligne tels que deux convoyeurs à bande, à rouleaux ou à galets sera décrit ci-après dans le cas d'un exemple correspondant à une courbe de 180°.

L'élément courbe se compose d'unités 1, 2, 3, 4 ... 7 placées entre l'entrée A et la sortie B, le sens de circulation étant indiqué par la flèche M. Ces unités 1-7 sont toutes identiques et la description se limitera à celle de l'un de ces éléments, par exemple l'unité 1 représentée plus particulièrement à la figure 2.

Ces unités 1-7 coopèrent avec un disque moteur 8 dont le sens de rotation est indiqué par la flèche N.

L'extrémité des axes des éléments 1-7 est logée dans un palier porté par un support ou carter 9. Comme cela apparaît à la figure 1, les unités 1-7 comportent chacune un axe 10 portant, comme organe de roulement, un galet extérieur 11 et un galet intérieur 12 ainsi qu'un galet d'entraînement 13. Le galet d'entraînement 13 est solidaire en rotation de l'axe 1, alors que les galets 11 et 12 ne sont pas, nécessairement, tous deux solidaires de l'axe 10. De manière préférentielle, seul le galet 11, situé à l'extérieur, est moteur alors que le galet 12, situé à l'intérieur, est libre en rotation. Suivant une variante, le galet d'entraînement 13 est monté libre en translation sur l'axe 10, de manière à pouvoir choisir le point de contact entre le galet d'entraînement 13 et la surface du disque d'entraînement 8, pour que la trajectoire soit plus ou moins rapprochée du centre O de manière à ralentir la vitesse de rotation ou à l'augmenter (dans le sens de l'écartement du galet d'entraînement 13 vers l'extérieur par rapport au point O sur le disque 8).

Bien que ce mode de réalisation ne montre que deux galets 11, 12 pour chaque unité 1 ... 7, la solution pourrait être différente et on pourrait avoir plus de deux galets dont certains seraient entraînés et d'autres libres en rotation pour ne servir qu'à la sustentation des produits qui circulent sur l'élément courbe et non à leur entraînement.

La figure 2 montre de manière plus détaillée le montage de l'unité 1 de l'élément courbe. Comme déjà indiqué, cette unité 1 comprend un axe 10 logé dans un palier extérieur 23 porté par le carter 9 et un palier intérieur 14. L'axe 10 porte un galet extérieur 11 et un galet intérieur 12. L'extrémité de l'axe 10 situé près du centre de la courbe est munie d'un galet d'entraînement 13 qui s'appuie contre la surface inférieure 15 tronconique du disque moteur 8 au-delà du palier 14, l'axe est relié par une rotule 16 à un ressort de compression 17 qui pousse le galet 13 contre la surface 15 du disque moteur 8.

Le ressort 17 est de préférence un ressort à gaz (ou ressort à air) dont la force exercée est relativement indépendante de la course.

La figure 2 montre également deux rails de guidage 20, 21 placés au-dessus du chemin de l'élément courbe. Cette figure montre également un produit 22 circulant sur les galets 11, 12.

Le relevage ou l'inclinaison de l'axe 10 par rapport à l'horizontale se fait par le déplacement relatif des paliers 23, 14 de manière à conserver un bon contact entre le galet d'entraînement 13 et le disque moteur 8 sans provoquer l'écrasement du galet 13 ou son éloignement trop grand de la surface du disque ne permettant plus son entraînement.

Il convient de remarquer que dans la description ci-dessus, l'élément courbe correspond à un arc de cercle centré sur l'axe de rotation (centre O) du disque moteur 8, les différentes unités 1-7 étant dirigées radialement quelle que soit par ailleurs leur inclinaison respective dans leur plan radial.

Il est possible que la courbe ne soit pas nécessairement un arc de cercle.

Bien que dans de nombreux cas, l'élément courbe soit associé à des convoyeurs rectilignes, il est également possible de combiner plusieurs éléments courbes de courbure différente ; dans ce cas, chaque élément aura son propre disque moteur.

**Revendications**

1. Elément courbe pour chemin de transfert, notamment pour être combiné à un convoyeur à bande, à chaînes, à courroies, à galets, à rouleaux, élément comprenant un châssis muni d'organes de roulement (galets, rouleaux), au moins certains organes de roulement (11, 12) étant solidaires d'un axe radial (10) portant solidairement en rotation un galet d'entraînement (13) qui roule pour être entraîné en rotation contre un disque moteur (8, 15) placé au centre de l'élément, caractérisé en ce que l'axe (10) est inclinable de manière réglable en étant monté dans deux paliers (23, 14) dont l'un (14) est coulissant libre et l'autre (23) est réglable en hauteur pour modifier l'inclinaison de l'axe (10), et la position du galet d'entraînement (13) par rapport au disque d'entraînement (15) est réglable.

2. Elément courbe selon la revendication 1, caractérisé en ce que le galet d'entraînement (13) est monté de manière réglable en translation sur son axe (10).

3. Elément courbe selon la revendication 1, caractérisé en ce que l'axe (10) est réglable.

4. Elément courbe selon la revendication 1, caractérisé en ce que le disque moteur (8, 15) a une surface de roulement conique.

5. Elément courbe selon la revendication 1, caractérisé en ce que le galet d'entraînement (13) et/ou le disque moteur (8, 15) contre lequel roule le galet (13) sont munis d'un revêtement antidérapant et le galet (13) est appliqué contre le disque (15, 8) par un ressort (17) notamment un ressort à gaz.

6. Elément courbe selon l'une quelconque des revendications 1 à 4, caractérisé en ce que chaque axe (10) porte au moins deux galets et le ou les galets situés à l'extérieur de la courbe sont moteurs, le ou les autres galets situés à l'intérieur de la courbe sont libres en rotation.

**Patentansprüche**

1. Element in Kurvenform für eine Transferstraße, insbesondere zur Kombination mit einem Bandförderer, einem Kettenförderer, einem Riemenförderer, einem Röllchenförderer, einem Rollenförderer, mit einem mit Rollorganen (Röllchen, Rollen) versehenen Rahmen, wobei mindestens einige der Rollorgane (11,12) auf einer radialen Welle (10) fest sind, die eine drehfeste Antriebsrolle (13) trägt, die zum Zwecke des Drehantriebs an einer in der Mitte des Elements angeordneten Antriebsscheibe (8,15) abrollt, dadurch gekennzeichnet, daß die Welle (10) geregelt neigbar ist, indem sie in zwei Lagern (23,14) gelagert ist, von denen das eine (14) frei verschiebbar und das andere (23) zur Änderung der Neigung der Welle (10) höhenregelbar ist, und daß die Position der Antriebsrolle (13) im Verhältnis zur Antriebsscheibe (15) regelbar ist.

2. Element in Kurvenform nach Anspruch 1, dadurch gekennzeichnet, daß die Antriebsrolle (13) auf ihrer Welle (10) längsverschiebbar angebracht ist.

3. Element in Kurvenform nach Anspruch 1, dadurch gekennzeichnet, daß die Welle (10) regelbar ist.

4. Element in Kurvenform nach Anspruch 1, dadurch gekennzeichnet, daß die Antriebsscheibe (8,15) eine konische Abrollfläche aufweist.

5. Element in Kurvenform nach Anspruch 1, dadurch gekennzeichnet, daß die Antriebsrolle (13) und/oder die Antriebsscheibe (8,15), an der die Antriebsrolle (13) abrollt, mit einer rutschsicheren Beschichtung versehen sind und daß die Rolle (13) gegen die Scheibe (15,8) durch eine Feder (17), insbesondere eine Gasfeder, angedrückt wird.

6. Element in Kurvenform nach einem der Ansprüche 1 bis 4, dadurch gekennzeichnet, daß jede Welle (10) mindestens zwei Rollen trägt und die im äußeren Bereich der Kurvenform angeordnete Rolle bzw. die entsprechenden Rollen angetrieben sind, während die im inneren Bereich der Kurvenform angeordnete Rolle bzw. die entsprechenden Rollen frei drehbar sind.

**Claims**

1. Curved element for a transfer line, especially to be combined with a band-, chain-, belt-, roller- or roll-type conveyor, said element comprising a framework equipped with rolling members (rollers, rolls), at least some rolling members (11, 12) being securely fastened to a radial shaft (10) securely carrying in rotation a driving roller (13) which rolls in order to be driven in rotation against a motor disc (8, 15) placed at the centre of the element, characterised in that the shaft (10) can be inclined in an adjustable manner by being mounted in two bearings (23, 14) one (14) of which can slide freely and the other (23) of which is adjustable height-wise in order to modify the inclination of the shaft (10), and the position of the driving roller (13) with respect to the driving disc (15) is adjustable.

2. Curved element according to Claim 1, characterised in that the driving roller (13) is mounted in a manner which is adjustable in translation on its shaft (10).

3. Curved element according to Claim 1, characterised in that the shaft (10) is adjustable.

4. Curved element according to Claim 1, characterised in that the motor disc (8, 15) has a conical rolling surface.

5. Curved element according to Claim 1, characterised in that the driving roller (13) and/or the motor disc (8, 15) against which the roller (13) rolls are equipped with a non-slip coating and the roller (13) is applied against the disc (15, 8) by a spring (17), especially a gas spring.

6. Curved element according to any one of Claims 1 to 4, characterised in that each shaft (10) carries at least two rollers and the roller or rollers situated on the outside of the curve are motorised, the other roller or rollers situated on the inside of the curve are free in rotation.

FIG_2

FIG_1

EP 0 356 268 B1